# EUROPÄISCHE PATENTANMELDUNG

(11) **EP 4 847 889 A1**
(43) Veröffentlichungstag der Anmeldung: **02.12.2026**
(21) Anmeldenummer: 25179929.2
(22) Anmeldetag: 30.05.2025
(51) Int. Cl.: G01F 23/26

(54) **VORRICHTUNG ZUM FÖRDERN VON BESCHICHTUNGSMATERIAL UND VERFAHREN ZUM ERFASSEN DES BESCHICHTUNGSMATERIALNIVEAUS IM VORRATSBEHÄLTER DER VORRICHTUNG**

(71) Anmelder: J. Wagner GmbH, 88677 Markdorf (DE)
(72) Erfinder: Räss, Silvio, 9444 Diepoldsau (CH); Fritsche, Roland, 9437 Marbach (CH); Schmid, René, 9452 Hinterforst (CH); Mazenauer, Rolf, 9450 Altstätten (CH); Kluser, Thomas, 9444 Diepoldsau (CH); Durrer, Roman, 9413 Oberegg (CH)
(74) Vertreter: Völkl Siebenson Patentanwälte - Partnerschaft mbB

(57) **Zusammenfassung**

Die erfindungsgemässe Vorrichtung zum Fördern von Beschichtungsmaterial (64) weist einen Vorratsbehälter (1) für Beschichtungsmaterial (64) auf. Zudem ist ein Förderer (10) vorgesehen, um das Beschichtungsmaterial (64) aus dem Vorratsbehälter (1) heraus zu fördern. Der Vorratsbehälter (1) weist eine Seitenwand (2) mit einer Öffnung (4) auf, welche mindestens so hoch ist wie die Niveaudifferenz (H), die sich aus dem minimalen Beschichtungsmittelniveau (63) und dem maximalen Beschichtungsmittelniveau (65) ergibt, welche während des Förderbetriebs auftreten können. Ein poröser Einsatz (20) ist in der Öffnung (4) angeordnet. Direkt hinter dem Einsatz (20) befindet sich ein Niveausensor (30) mit einem Erfassungsbereich, der mindestens so hoch wie die Niveaudifferenz (H) ist. Der Niveausensor (30) ist so ausgebildet, dass er das Niveau des Beschichtungsmaterials (64) stufenlos erfasst. Die Vorrichtung weist zudem einen Spülgasanschluss (40) auf, um Spülgas durch den Einsatz (20) in den Vorratsbehälter (1) zu führen.

## Beschreibung

### Technisches Gebiet

Die Erfindung betrifft eine Vorrichtung zum Fördern von Beschichtungsmaterial aus einem Vorratsbehälter der Vorrichtung. Die Vorrichtung zum Fördern, im Folgenden auch Fördervorrichtung genannt, ist in der Regel Teil einer Beschichtungsanlage, mit der Werkstücke mit Beschichtungsmaterial beschichtet werden können. Wenn das Beschichtungsmaterial pulverförmig ist, wird es auch kurzum als Beschichtungspulver oder nur als Pulver bezeichnet. Die Erfindung betrifft zudem ein Verfahren zum Erfassen des Beschichtungsmaterialniveaus im Vorratsbehälter der Fördervorrichtung.

### Stand der Technik

Aus dem Stand der Technik EP 1 953 507 A1 ist eine Pulverniveau-Sensoreinheit für Sprühbeschichtungspulver bekannt, die zum Erfassen des Niveaus des Sprühbeschichtungspulvers in einem Pulverbehälter dient. Die Pulverniveau-Sensoreinheit ist als Grenzschalter ausgebildet, sodass sie den Füllstand nicht stufenlos, sondern punktuell misst. Falls der Füllstand im Pulverbehälter einen bestimmten Grenzwert unterschreitet, gibt die Pulverniveau-Sensoreinheit ein Signal aus. Mit dieser Pulverniveau-Sensoreinheit kann allerdings nicht festgestellt werden, wie weit das Pulverniveau vom Sollwert (Grenzwert) abweicht, sondern lediglich, ob das Pulverniveau vom Sollwert (Grenzwert) abweicht. Daher ist mit der Pulverniveau-Sensoreinheit eine prozesssichere Förderung nur eingeschränkt möglich. Dies ist insbesondere dann der Fall, wenn das Pulverniveau im Pulverbehälter innerhalb einer bestimmten Bandbreite schwanken darf und der Regler (Regeleinheit zum Nachfüllen des Pulvers) die Höhe der Regeldifferenz (Abweichung des Ist-Niveaus des Pulvers vom Soll-Niveau des Pulvers) an das aktuelle Pulverniveau anpassen soll. Der Regler ist also so ausgebildet, dass er bei einer deutlichen Abweichung des Ist-Niveaus vom Soll-Niveau mehr Pulver nachführt als bei einer geringen Regeldifferenz. Ein solcher Regler kann mit der in der EP 1 953 507 A1 beschriebenen Pulverniveau-Sensoreinheit nicht betrieben werden.

Aus der Druckschrift EP 4 134 637 A1 ist ein Füllstandmessgerät mit einer kapazitiven Füllstandsonde bekannt. Das Füllstandmessgerät dient zur Füllstandsmessung von Füllgut in einem Behälter. Die Messelektronik des Füllstandmessgeräts erfasst den Füllstand im Behälter entlang der Messstrecke kontinuierlich. Falls sich allerdings Füllgut vor dem Erfassungsbereich der Füllstandsonde ablagert, kann das dazu führen, dass die Messelektronik einen falschen Füllstand ausgibt.

### Darstellung der Erfindung

Eine Aufgabe der Erfindung ist es, eine Vorrichtung zum Fördern von Beschichtungsmaterial anzugeben, die prozesssicher arbeitet. Eine weitere Aufgabe der Erfindung ist es, ein Verfahren zum Erfassen des Beschichtungsmaterialniveaus im Vorratsbehälter der Fördervorrichtung anzugeben, welches besonders prozesssicher arbeitet.

Unter prozesssicher wird unter anderem verstanden, dass bei der Fördervorrichtung das Beschichtungsmaterialniveau während des Förderbetriebs dauerhaft zuverlässig gemessen werden kann.

Vorteilhafterweise kann bei der erfindungsgemässen Fördervorrichtung das Niveau des Beschichtungsmaterials dauerhaft fehlerfrei, also auch frei von Drift erfasst werden.

Die Aufgabe wird durch eine Vorrichtung zum Fördern von Beschichtungsmaterial mit den in Patentanspruch 1 angegebenen Merkmalen gelöst.

Die erfindungsgemässe Vorrichtung zum Fördern von Beschichtungsmaterial weist einen Vorratsbehälter für Beschichtungsmaterial und einen Förderer auf, um das Beschichtungsmaterial aus dem Vorratsbehälter heraus zu fördern. Der Vorratsbehälter weist eine Seitenwand mit einer Öffnung auf, welche mindestens so hoch ist wie die Niveaudifferenz, die sich aus einem minimalen unteren Beschichtungsmittelniveau und einem maximalen oberen Beschichtungsmittelniveau ergibt, wobei das Niveau des Beschichtungsmaterials während des Förderbetriebs innerhalb der Niveaudifferenz schwanken kann. In der Öffnung des Vorratsbehälters ist ein poröser Einsatz angeordnet. Direkt hinter dem Einsatz ist ein Niveausensor angeordnet, wobei dessen Erfassungsbereich mindestens so hoch wie die Niveaudifferenz ist. Der Niveausensor ist derart ausgebildet und betreibbar, dass er das Niveau des Beschichtungsmaterials stufenlos erfasst. Zudem ist ein Spülgasanschluss vorgesehen, über den Spülgas durch den Einsatz hindurch in den Vorratsbehälter leitbar ist.

Vorteilhafte Weiterbildungen der Erfindung ergeben sich aus den in den abhängigen Patentansprüchen angegebenen Merkmalen.

Bei einer Ausführungsform der erfindungsgemäßen Vorrichtung ist der Einsatz so ausgebildet, dass er durchlässig für Spülgas und undurchlässig für das Beschichtungsmaterial ist. Damit wird verhindert, dass Beschichtungsmaterial über den Einsatz zum Niveausensor gelangt. Das Spülgas kann jedoch durch den Einsatz hindurchgeleitet werden. Mit Hilfe des Spülgases kann der Einsatz gereinigt werden.

Bei einer anderen Ausführungsform der erfindungsgemäßen Vorrichtung erstreckt sich ein Spülkanal entlang der Längsseite des Niveausensors. Der Einsatz bildet zumindest eine Seitenwand des Spülkanals. Dadurch kann der Einsatz über die Länge des Spülkanals mit Spülgas durchspült werden. Mit dem Spülgas wird vor und auch möglicherweise innerhalb des Einsatzes befindliches Beschichtungsmaterial entfernt. Wenn sich im oder am Einsatz Beschichtungsmaterial anlagert, kann dies zu fehlerhaften Niveaumessungen führen. Indem der Einsatz von Ablagerungen befreit wird, werden durch Anhaftungen bedingte fehlerhafte Niveaumessungen vermieden.

Bei einer weiteren Ausführungsform der erfindungsgemäßen Vorrichtung weist der Einsatz eine lange Seite und eine schmale Seite auf. Der Spülkanal weist Spülkanalauslässe auf, die entlang der langen Seite des Einsatzes verteilt sind. Die Spülkanalauslässe sind vorgesehen, um Spülgas in den Einsatz leiten zu können, um den Einsatz mit Spülgas zu spülen.

Bei einer weiteren Ausführungsform der erfindungsgemäßen Vorrichtung weist der Einsatz eine lange Seite und eine schmale Seite auf. Die lange Seite des Einsatzes ist mindestens so lang wie die Länge des Erfassungsbereichs des Niveausensors.

Bei einer Weiterbildung der erfindungsgemäßen Vorrichtung ist der Niveausensor als kapazitiver Niveausensor ausgebildet. Dies hat den Vorteil, dass die Niveaumessung berührungslos erfolgt. Zudem kann der kapazitive Niveausensor für eine Vielzahl unterschiedlicher Beschichtungsmaterialien benutzt werden.

Bei einer anderen Ausführungsform der erfindungsgemäßen Vorrichtung liegt der Niveausensor direkt am Einsatz an. Vorteilhafterweise liegt der Erfassungsbereich des Niveausensors plan am Einsatz an.

Bei einer anderen Ausführungsform ist eine Steuerung vorhanden, die derart ausgebildet ist, dass sie dafür sorgen kann, dass das Spülgas diskontinuierlich durch den Einsatz hindurch strömt.

Bei einer anderen Ausführungsform der erfindungsgemäßen Vorrichtung ist eine Fördereinheit vorhanden. Die Fördereinheit ist vorgesehen, um Beschichtungsmaterial in den Vorratsbehälter zu fördern.

Bei einer zusätzlichen Ausführungsform der erfindungsgemäßen Vorrichtung weist der Vorratsbehälter einen Fluidisiergaseinlass auf. Durch den Fluidisiergaseinlass kann Fluidisiergas in das Beschichtungsmaterial geleitet werden, um das Beschichtungsmaterial im Vorratsbehälter zu fluidisieren. Dadurch kann Beschichtungsmaterial besonders gleichmäßig gefördert werden. Des Weiteren bewirkt die Fluidisierung eine Egalisierung des Beschichtungsmaterials im Vorratsbehälter, sodass das Niveau des Beschichtungsmaterials einheitlicher wird.

Bei dem erfindungsgemäßen Verfahren zum Erfassen des Beschichtungsmaterialniveaus im Vorratsbehälter der Fördervorrichtung wird das Niveau des Beschichtungsmaterials mit Hilfe des Niveausensors stufenlos erfasst. Wenn ein bestimmtes Ereignis auftritt, wird Spülgas durch den Einsatz geleitet.

Vorteilhafterweise wird bei einer Weiterbildung des erfindungsgemässen Verfahrens das Spülgas impulsweise durch den Einsatz geleitet, wenn ein bestimmtes Ereignis auftritt.

Zudem ist es von Vorteil, wenn bei dem erfindungsgemässen Verfahren die Erfassung des Niveaus unterbrochen wird, wenn Spülgas durch den Einsatz geleitet wird. Dadurch wird sichergestellt, dass während des Spülens keine Fehlmessungen erfolgen.

### Kurze Beschreibung der Zeichnungen

Im Folgenden wird die Erfindung mit mehreren Ausführungsbeispielen anhand von mehreren Figuren weiter erläutert.
- Figur 1: zeigt eine mögliche Ausführungsform der erfindungsgemässen Fördervorrichtung für Beschichtungsmaterial.
- Figur 2: zeigt eine mögliche Ausführungsform eines Vorratsbehälters, der Teil der erfindungsgemässen Fördervorrichtung ist.
- Figur 3: zeigt eine Schnittdarstellung des Vorratsbehälters und weiterer Komponenten, die am Vorratsbehälter verbaut sind in der Draufsicht.
- Figur 4: zeigt eine vergrößerte Darstellung des Teilbereichs B aus Figur 3.
- Figur 5: zeigt eine Schnittdarstellung des Vorratsbehälters in der Seitenansicht.
- Figur 6: zeigt eine vergrößerte Darstellung des Teilbereichs A aus Figur 5.
- Figur 7: zeigt in einer Explosionsdarstellung eine mögliche Ausführungsform einer Baugruppe, die einen Niveausensor und einen Einsatz umfasst.
- Figur 8: zeigt den Einsatz schräg von vorne, also der Seite, die dem Vorratsbehälter zugewandt ist.
- Figur 9: zeigt den Einsatz im Längsschnitt.
- Figur 10: zeigt den Einsatz schräg von hinten, das heisst die dem Vorratsbehälter abgewandte Seite des Einsatzes.
- Figur 11: zeigt die hintere Seite des Einsatzes in einer vergrößerten Darstellung.
- Figur 12: zeigt die Baugruppe von hinten.
- Figur 13: zeigt die Baugruppe entlang des Schnitts C-C.
- Figur 14: zeigt die Baugruppe entlang des Schnitts D-D.
- Figur 15: zeigt die Baugruppe entlang des Schnitts E-E.
- Figur 16: zeigt in Form eines Ablaufdiagramms ein Beispiel für ein Verfahren zum Spülen des Einsatzes.

### Wege zur Ausführung der Erfindung

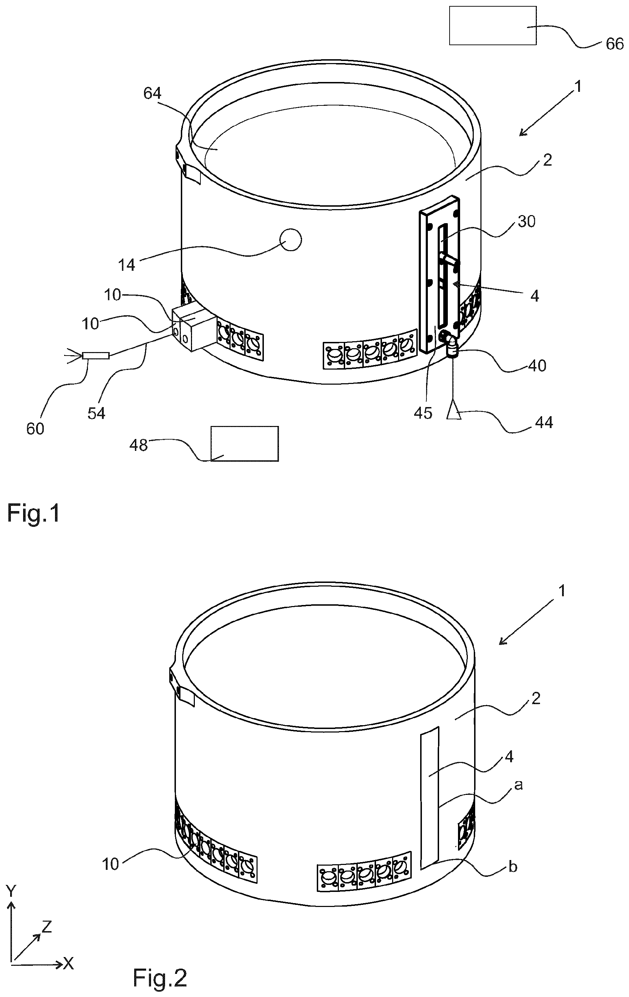

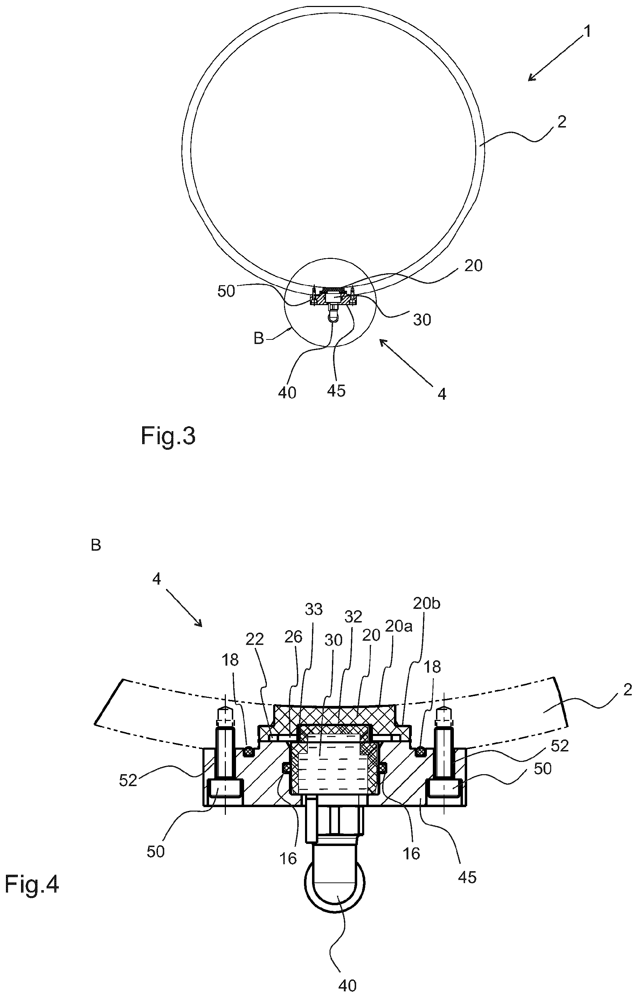

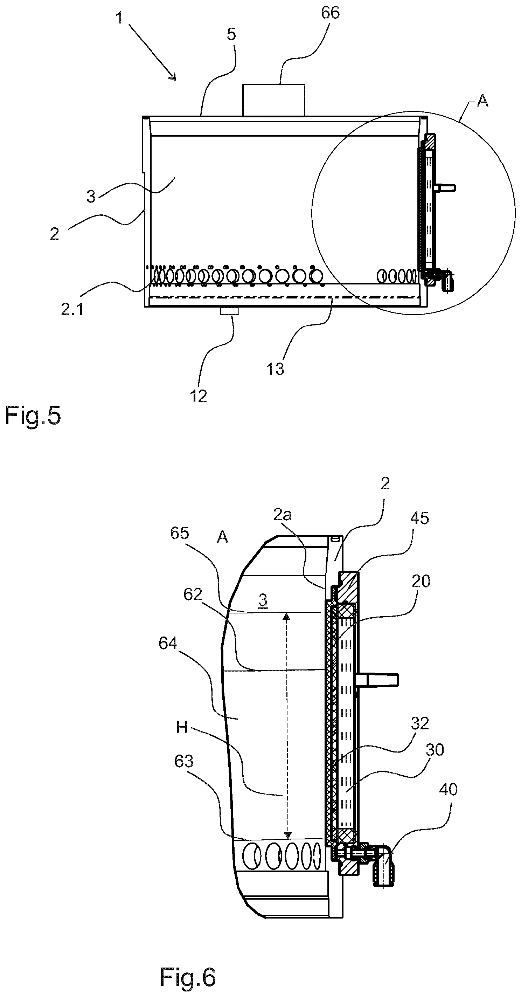

Figur 1 zeigt ein Beispiel für eine Fördervorrichtung mit einem Vorratsbehälter 1 für Beschichtungsmaterial 64. Wie in Figur 5 gezeigt, ist der Vorratsbehälter 1 in der Regel mit einem abnehmbaren Deckel 5 verschliessbar. Der Vorratsbehälter 1 und der Deckel 5 können so ausgebildet sein, dass im Vorratsbehälter ein Überdruck aufbaubar ist. Der Vorratsbehälter 1 (siehe auch Figuren 2 und 3) umfasst eine Seitenwand 2, in der sich eine längliche Öffnung 4 befindet. In der länglichen Öffnung 4 ist ein poröser Einsatz 20 (siehe z.B. Figur 4) angeordnet.

Hinter dem Einsatz 20 befindet sich ein Niveausensor 30. Der Einsatz 20 sowie der Niveausensor 30 sind über eine Abdeckung 45 an der Seitenwand 2 positioniert. Die Abdeckung 45 ist an der Außenseite der Seitenwand 2 fixiert. Die Abdeckung 45 weist einen Spülgasanschluss 40 auf, über den Spülgas zum Einsatz 20 und zum Niveausensor 30 geleitet werden kann. Das Spülgas dient dazu Beschichtungsmaterial 64, das sich unerwünschter Weise am Einsatz 20 und/oder am Niveausensor 30 abgelagert hat, zu entfernen. Das Spülgas stammt von einer Spülgasquelle 44. Die Spülgasquelle 44 stellt unter Druck stehendes Spülgas zur Verfügung.

Weiter ist der Figur 1 ein Förderer 10 zum Fördern von Beschichtungsmaterial 64 aus dem Vorratsbehälter 1 gezeigt. Die erfindungsgemässe Fördervorrichtung kann eine Vielzahl solcher Förderern 10 aufweisen. Zur besseren Übersicht sind in Figur 1 nur zwei Förderer 10 schematisch dargestellt. Der Förderer 10 kann das Beschichtungsmaterial 64 über einen Schlauch 54 zu einem Applikator 60 fördern.

An der Seitenwand 2 des Vorratsbehälters 1 kann ein Detektor 14 angeordnet sein. Dieser ist dabei vorteilhaft im oberen Bereich der Seitenwand 2 angeordnet und als Grenzschalter ausgebildet. Mit dem Detektor 14 kann der maximal zulässige Füllstand erfasst werden. Bei Erreichen des maximal zulässigen Füllstandes kann beispielsweise die Förderung von Beschichtungsmaterial 64 in den Vorratsbehälter 1 automatisch unterbrochen werden.

Die Fördervorrichtung kann eine Steuerung 48 aufweisen, die vorteilhafterweise mit dem Spülgasanschluss 40 respektive der Spülgasquelle 44, dem Niveausensor 30, dem Detektor 14, dem Förderer 10, dem Applikator 60 und der Zuführeinrichtung 66 verbunden ist. Die Verbindungen können kabelgebunden oder kabellos ausgeführt sein. Der Übersichtlichkeit halber sind die Verbindungen in Figur 1 nicht gezeigt.

Die Öffnung 4 weist eine längliche Form auf. Die Länge a der Öffnung 4 erstreckt sich in Y-Richtung, also in vertikaler Richtung. Die Breite b der Öffnung 4 erstreckt sich in X-Richtung, also in horizontaler Richtung. Die Länge a ist größer als die Breite b.

Die Öffnung 4 ist durch den Einsatz 20 zumindest bereichsweise ausgefüllt, sodass der Einsatz 20 in der Öffnung 4 angeordnet ist. Der Bereich mit der Öffnung 4 und den dort angeordneten Komponenten ist in der vergrößerten Darstellung B in Figur 4 gezeigt. Der Niveausensor 30 ist zumindest teilweise im Einsatz 20 angeordnet (siehe z.B. Figur 4). Der Einsatz 20 weist dazu eine Stufe 33 auf. Der Einsatz 20 weist hierzu zwei voneinander abgesetzten Flächen 20a und 20b auf. Der Niveausensor 30 liegt dabei bevorzugt mit seinem Erfassungsbereich 32 direkt am Einsatz 20 an. Der Erfassungsbereich 32 ist die Sensorfläche, welche eine Länge und Breite aufweist, wobei der Erfassungsbereich 32 dabei vollflächig an dem Einsatz 20 anliegt. Entlang des Erfassungsbereich 32 des Niveausensors 30 ist ein Spülkanal 22 angeordnet. Der Spülkanal 22 weist seitlich neben dem Erfassungsbereich 32, also entlang der länglichen Seite des Einsatzes 20, mindestens ein Spülkanalauslass 26 auf. Der Einsatz 20 und der Niveausensor 30 werden über die Abdeckung 45 in Position gehalten und an der Seitenwand 2 des Vorratsbehälters 1 fixiert. Vorteilhaft wird mindestens eine Seite des Spülkanals 22 und der Spülkanalauslass 26 durch die Abdeckung 45 gebildet. Die Abdeckung 45 ist dabei über Befestigungsmittel 50 an der Seitenwand 2 angebracht. Zwischen der Abdeckung 45 und der Seitenwand 2 des Vorratsbehälters 1 ist vorzugsweise eine Dichtung 18, beispielsweise in Form eines O-Rings angeordnet. Es können dort auch mehrere Dichtungen vorgesehen sein. Ebenso ist zwischen dem Niveausensor 30 und der Abdeckung 45 vorzugsweise eine Dichtung 16, beispielsweise in Form eines O-Rings angebracht. Auch hier können mehrere Dichtungen 16 vorgesehen sein. Die Abdeckung 45 weist einen Spülgasanschluss 40 auf, der das Spülgas zu dem mindestens einen Spülkanal führt. Die Dichtungen 16, 18 dienen dabei dazu, dass das Spülgas nicht beispielsweise zwischen der Seitenwand 2 und der Abdeckung 45 austritt.

Figur 5 zeigt den Vorratsbehälter 1 in der Seitenansicht im Schnitt. Dessen Seitenwand 2 weist mehrere Pulverauslässe 2.1 auf, durch die die an der Seitenwand 2 angeordneten Förderer 10 (siehe Figur 1) das Pulver aus dem Vorratsbehälter 1 herausfördern können. Im Inneren des Vorratsbehälters 1 können eine Fluidisiereinrichtung 12 und ein Fluidisierboden 13 angeordnet sein, welche in Figur 5 schematisch dargestellt sind. Die Fluidisiereinrichtung 12 und Fluidisierboden 13 sorgen dafür, dass das Beschichtungsmaterial innerhalb des Vorratsbehälters 1 fluidisiert wird. Dies bringt unter anderem Vorteile hinsichtlich der Förderung des Beschichtungsmaterials aus dem Vorratsbehälter 1 mit sich. Zudem kann eine Fördereinheit 66 vorgesehen sein, welche Beschichtungsmaterial in den Innenraum 3 des Vorratsbehälters 1 fördert.

Die Fördereinheit 66 ist in Figur 5 schematisch dargestellt.

Figur 6 zeigt den vergrößerten Bereich A aus Figur 5. Der Einsatz 20 schließt vorzugsweise flächenbündig mit der Innenseite 2a der Seitenwand 2 ab. Dies hat wie weiter oben beschrieben mehrere Vorteile. Würde der Einsatz 20 nicht flächenbündig mit der Innenseite 2a abschliessen, entstünde am Übergang ein Totraum, in dem sich Pulver ablagern könnte. Durch den flächenbündigen Einbau wird der Totraum vermieden, was bei einem Wechsel von einem Beschichtungsmaterial zu einem anderen den Reinigungsaufwand reduziert und die prozesssichere Förderung weiter verbessert. Hinter dem Einsatz 20, also auf der dem Innenraum 3 des Vorratsbehälters 2 abgewandten Seite, befindet sich der Niveausensor 30. Der Niveausensor 30 hat einen länglichen Erfassungsbereich 32, sodass das Niveau 62 des Beschichtungsmaterials 64 kontinuierlich und stufenlos erfasst werden kann. Mit Hilfe der Abdeckung 45 werden der Niveausensor 30 und der Einsatz 20 in respektive an der Seitenwand 2 fixiert.

Mit Hilfe des Spülgasanschlusses 40 kann das Spülgas zum Erfassungsbereich 32 des Niveausensors 30 und durch den Einsatz 20 hindurch geleitet werden. Damit kann abgelagertes Beschichtungsmaterial (in den Figuren nicht gezeigt) gelöst werden, das sich beispielsweise vor dem Einsatz 20 befindet. Dies sorgt unter anderem dafür, dass der Niveausensor 30 das Niveau 62 des Beschichtungsmaterials 64 fehlerfrei erfassen kann, wie weiter oben beschrieben.

Das Niveau 62 des Beschichtungsmaterials 64 ist in Figur 6 beispielhaft dargestellt. Während des Förderbetriebs kann das Niveau 62 des Beschichtungsmaterials 64 zwischen einem minimalen Niveau 63 und einem maximalen Niveau 65 schwanken. Die Differenz zwischen dem maximalen Niveau 65 und dem minimalen Niveau 63 wird als Niveaudifferenz H bezeichnet.

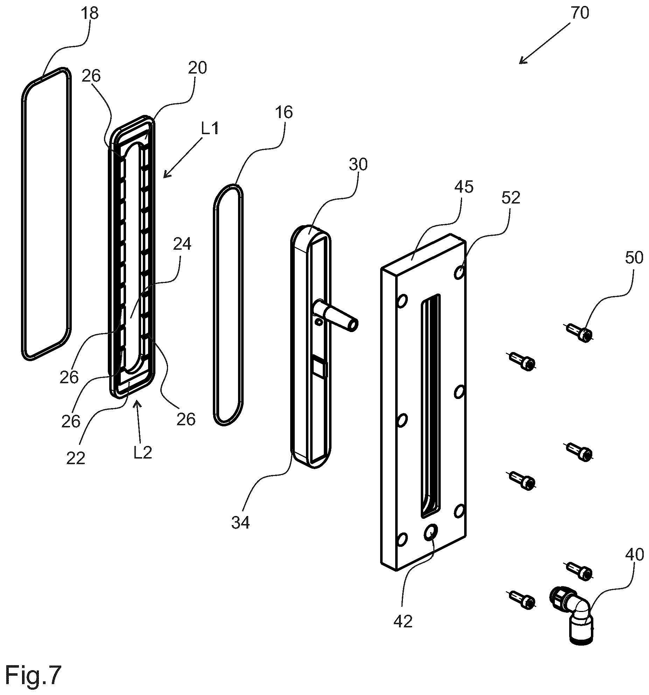

Die Figur 7 zeigt eine mögliche Ausführungsform einer Baugruppe 70 in Explosionsdarstellung. Die Baugruppe 70 kann beispielsweise einen O-Ring 18, den Einsatz 20, einen O-Ring 16, den Niveausensor 30, die Abdeckung 45, Befestigungsmittel 50 und den Spülgasanschluss 40 umfassen.

Der Einsatz 20 weist einen umlaufenden Spülkanal 22 und Spülgaskammern 26 auf, in denen sich das Spülgas verteilen kann. Die Spülgaskammern 26 sind entlang der langen Seite L1 des Einsatzes 20 angeordnet. Das Spülgas strömt über die Spülgaskammern 26 in den gasdurchlässigen Einsatz 20 und von dort in den Vorratsbehälter 1. Die Spülgaskammern 26 fungieren also als Spülgasauslässe für den Spülkanal 22.

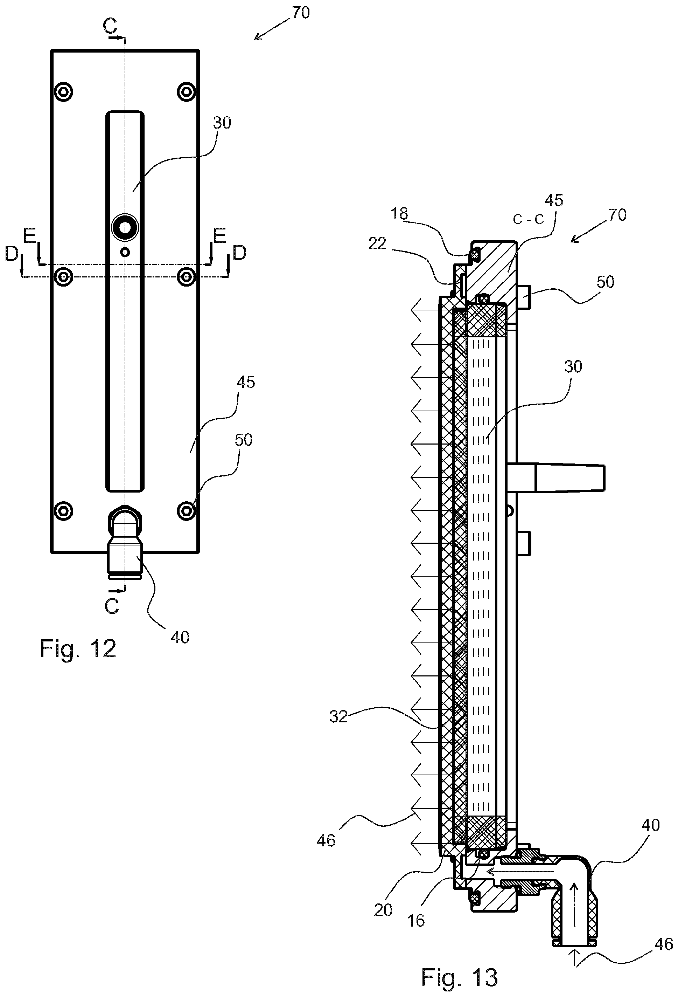

Der Einsatz 20 weist eine Vertiefung auf, die als Sensorkammer 24 dient. Im montierten Zustand befindet sich der vordere Teil des Niveausensors 30 in der Sensorkammer 24. Weiter ist die lange Seite L1 und die schmale Seite L2 und damit die längliche Form des Einsatzes 20 zu erkennen. Zwischen dem Einsatz 20 und dem Niveausensor 30 befindet sich vorteilhafterweise eine Dichtung 16. Zwischen der Seitenwand 2 und der Abdeckung 45 ist vorteilhaft eine weitere Dichtung 18 angeordnet (siehe Figur 13). Die Abdeckung 45 befestigt den Niveausensor 30 und den Einsatz 20 an der Seitenwand 2. Zusätzlich können dabei auch die gezeigten Dichtungen 16, 18 befestigt werden. Die Abdeckung 45 ist dabei über Befestigungsmittel 50 an der Seitenwand 2 befestigt. Die Befestigungsmittel 50 greifen in die Aufnahme 52 der Abdeckung 45 ein. Die Aufnahme 52 ist vorteilhaft auch an der Seitenwand 2 vorgesehen. Zur besseren Übersicht sind in Fig. 7 nur jeweils ein Befestigungsmittel 50 und eine Aufnahme 52 mit einem Bezugszeichen versehen. Der Spülgasanschluss 40 ist über eine Aufnahme 42 an der Abdeckung 45 befestigt.

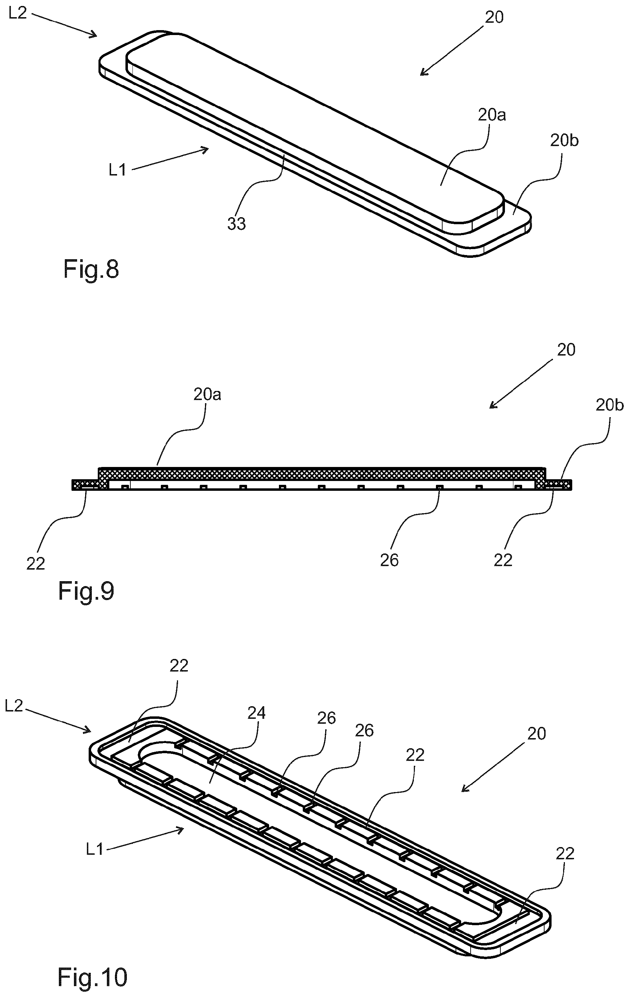

Die Figur 8 zeigt den Einsatz 20 schräg von vorne und Figur 9 zeigt den Einsatz 20 im Längsschnitt. In Figur 10 ist der Einsatz 20 schräg von hinten gezeigt. Die stufenartige Ausgestaltung des Einsatzes 20, welche mit den Bezugszeichen 20a und 20b verdeutlicht werden soll. Der Bereich 20b ist gegenüber dem Bereich 20a herabgesetzt. Die lange Seite L1 und die schmale Seite L2 kennzeichnen die längliche Form des Einsatzes 20. Der Einsatz 20 weist den umlaufenden Spülkanal 22 auf. Ebenso ist hier eine Vielzahl von Spülkanalauslässen 26 gezeigt.

Es kann vorgesehen sein, dass auch entlang der schmalen Seite L2 mindestens ein weiterer Spülkanalauslass angeordnet ist. Mindestens eine Seitenwand des Spülkanals 22 und des Spülkanalauslasses 26 wird durch den Einsatz 20 gebildet.

Der stufenartige Aufbau des Einsatzes 20 unterstützt die Ausgestaltung der Sensorkammer 24. In der Sensorkammer 24 wird der Niveausensor 30 mit seinem Erfassungsbereich eingelegt. Der Niveausensor 30 wird somit zumindest teilweise von der Sensorkammer 24 und damit vom Einsatz 20 aufgenommen respektive umschlossen.

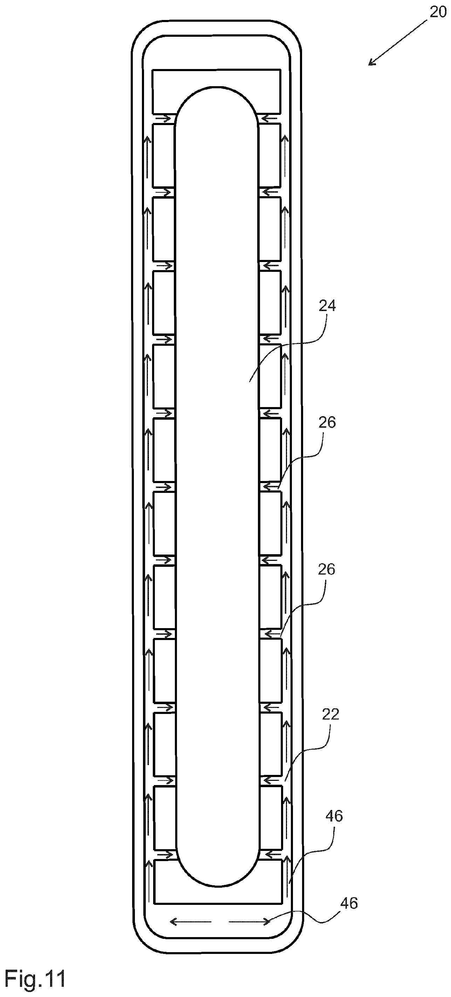

Die Figur 11 zeigt den Einsatz 20 von hinten. Durch den Spülkanal 22 und die Spülkanalauslässe 26 kann die Strömung des Spülgases beeinflusst und somit zielgerichtet in Richtung der Sensorkammer 24 gesteuert werden. Die Strömungsrichtung des Spülgases wird durch Pfeile 46 angedeutet.

Vorzugsweise besteht der gesamte Einsatz 20 aus einem porösen Material. Staudrücke werden wirksam verhindert, da das Spülgas durch den gesamten Einsatz 20 in den Vorratsbehälter 1 strömen kann.

Die Figur 12 zeigt die Baugruppe 70. Weiter sind in Figur 12 der Niveausensor 30, der Spülgasanschluss 40, die Abdeckung 45 sowie die Befestigungsmittel 50 gezeigt. Auch sind hier die Schnitte C-C, D-D und E-E angedeutet, welche in den Figuren 13, 14 und 15 dargestellt sind.

Die Figur 13 zeigt die Baugruppe 70 entlang des Schnittes C-C. Der Niveausensor 30 liegt mit seinem Erfassungsbereich 32 direkt an dem Einsatz 20 an. Der Erfassungsbereich 32 liegt plan am Einsatz 20 an. Über den Spülgasanschluss 40 kann Spülgas durch den Einsatz 20 geleitet werden. Das Spülgas wird über den Spülgasanschluss 40 zugeführt und in den Spülkanal 22 geleitet und strömt dann durch den Einsatz 20 hindurch. Die Strömungsrichtung des Spülgases ist mit den Pfeilen 46 veranschaulicht. Eine Abdichtung erfolgt beispielsweise über die O-Ringe 16 und 18.

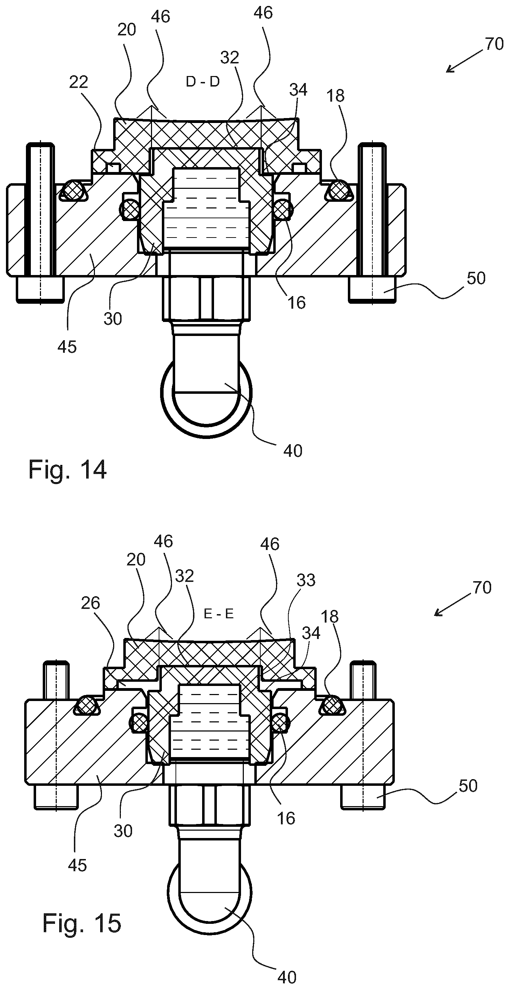

Die Figur 14 zeigt die Baugruppe 70 entlang des Schnittes D-D. Der Niveausensor 30 liegt mit seinem Erfassungsbereich 32 direkt an dem Einsatz 20 an. Beim Einsatz 20 ist seine zweistufige Ausbildung zu sehen (Fig. 8 - 10), sodass der Niveausensor 30 zumindest teilweise in der Sensorkammer (Fig. 10) liegt. Der Niveausensor 30 weist einen hervorstehenden Erfassungsbereich 32 und eine umlaufende Schulter 34 auf. Der Erfassungsbereich liegt innerhalb der Sensorkammer (Fig. 10) und liegt direkt am Einsatz 20 an, während die umlaufende Schulter 34 außerhalb der Sensorkammer am Einsatz 20 anliegt.

Über den Spülgasanschluss 40 kann der Einsatz 20 mit Spülgas gespült werden. Der Einsatz 20 weist hierzu einen Spülkanal 22 auf. Die Austrittsrichtung des Spülgases aus dem Einsatz 20 ist mit Pfeilen 46 gekennzeichnet. Über die Abdeckung 45 und mit den Befestigungsmitteln 50 kann die Baugruppe 70 an der Seitenwand 2 des Vorratsbehälters 1 befestigt werden.

Die Figur 15 zeigt die Baugruppe 70 im Schnitt E-E. Die Schnittebene E-E liegt etwas höher als die Schnittebene D-D, sodass Figur 15 den Spülkanal 22 und den Spülkanalauslass 26 und Figur 14 nur den Spülkanal 22 zeigt. Der Niveausensor 30 liegt mit seinem Erfassungsbereich 32 vorzugsweise plan am Einsatz 20 an. Über den Spülgasanschluss 40 kann der Einsatz 20 mit Spülgas durchspült werden, und zwar so, dass das Spülgas von hinten durch den Einsatz 20 hindurch nach vorne in den Vorratsbehälter 1 strömt. Die Austrittsrichtung des Spülgases aus dem Einsatz 20 ist über die Pfeile 46 gekennzeichnet.

Um prozesssicher fördern zu können, ist es zum Beispiel von Vorteil, wenn das Pulverniveau kontinuierlich und/oder dauerhaft präzise gemessen werden kann. Um das Beschichtungsmaterial 64 prozesssicher fördern zu können, kann es auch hilfreich sein, zu vermeiden, dass sich Beschichtungsmaterial 64 im Vorratsbehälter 1 vor dem Erfassungsbereich des Niveausensors ablagert. Für die Prozesssicherheit kann es ausreichen, wenn dafür gesorgt ist, dass sich oberhalb des tatsächlichen Pulverniveaus (also dort, wo die Sensormesstrecke eigentlich frei von Pulver sein sollte), nur so wenig Pulver vor dem Erfassungsbereich 32 des Niveausensors 30 ablagert, dass dieses Pulver keinen nennenswerten Einfluss auf die Messgenauigkeit hat. Wenn sich dort zu viel Beschichtungsmaterial 64 im Erfassungsbereich 32 des Niveausensors 30 ablagert, kann dies das Messergebnis verfälschen. Es geht also insbesondere darum, die Ablagerung von Beschichtungsmaterial 64 vor dem Erfassungsbereich 32 des Niveausensors 30 zu vermeiden oder zumindest so weit zu reduzieren, dass die Ablagerung keinen störenden Einfluss auf die Niveaumessung hat.

Bei einer Ausführungsform der erfindungsgemäßen Vorrichtung bildet die Niveaudifferenz H den üblichen Arbeitsbereich des Vorratsbehälters 1. Die Niveaudifferenz H ergibt sich aus dem minimalen Beschichtungsmaterialniveau 63 und dem maximalen Beschichtungsmaterialniveau 65.

Beim Beschichten von Werkstücken kommt es aus verschiedenen Gründen häufig vor, dass von einem ersten Beschichtungsmaterial zu einem zweiten Beschichtungsmaterial gewechselt wird, das eine andere Eigenschaft als das erste Beschichtungsmaterial aufweist. So kann beispielsweise das erste Beschichtungsmaterial Metallic-Pulver und das zweite ein Matt-Beschichtungsmaterial sein. Oder das erste und das zweite Beschichtungsmaterial unterscheiden sich durch ihre Farbe. Bei einem solchen Beschichtungsmaterial-Wechsel ist ein Verschleppen des Materials unerwünscht. Die Erfindung hat den Vorteil, dass die Verschleppung von Beschichtungsmaterial minimiert respektive verhindert wird. Erreicht wird dies, indem der Totraum im Bereich des Niveausensors 30 minimiert ist. Dies begünstigt auch eine prozesssichere Materialförderung.

Vorteilhafterweise weist der Einsatz 20 eine Dicke auf, welche zwischen 1 mm und 10 mm liegt. Bei dieser Dicke ist gewährleistet, dass der Niveausensor 30 durch den Einsatz 20 hindurch sehr präzise Messergebnisse liefert.

Vorteilhafterweise ist der Einsatz 20 aus einem porösen Material hergestellt, welches eine Porengröße zwischen 10 µm und 50 µm und weiter bevorzugt zwischen 20 µm und 30 µm aufweist. Somit kann das Beschichtungsmaterial 64 nicht durch den Einsatz 20 hindurchtreten. Zwar kann es vorkommen, dass sich in einzelnen Poren des Einsatzes 20 Beschichtungsmaterial 64 absetzt, dieses wird jedoch mit Hilfe des Spülgases wieder aus dem Einsatz 20 herausgespült.

Für spezielle Anwendungen kann es von Vorteil sein, wenn der Einsatz 20 aus einem semipermeablen Material gefertigt ist, das definierte zusätzliche Eigenschaften aufweist. So kann der Einsatz 20 beispielweise für Beschichtungspulver 64 mit einer bestimmten Korngröße, Polarität oder Ladung undurchlässig sein.

Weiter ist es vorteilhaft, wenn der Einsatz 20 den Innenraum 3 des Vorratsbehälters 1 vom Bereich außerhalb des Vorratsbehälters 1 mechanisch trennt. Innerhalb des Vorratsbehälters 1 befindet sich die ATEX-Zone 20, außerhalb des Vorratsbehälters die ATEX-Zone 22. Der Einsatz 20 ist derart ausgebildet, dass er die beiden Zonen rein mechanisch trennt.

Weiter ist es vorteilhaft, wenn der Einsatz 20 mit der Behälterinnwandung 2a des Vorratsbehälters 1 flächenbündig verbaut ist. Dadurch lassen sich Toträume vermeiden, in denen sich sonst Beschichtungsmaterial 64 ansammeln könnte. Der Vorratsbehälter 1 kann so besser gereinigt werden. Dies ist insbesondere bei einem Wechsel des Beschichtungsmaterials, beispielsweise einem Farbwechsel wichtig. Dies ist ebenso im Hinblick auf die prozesssichere Förderung vorteilhaft, da so das Risiko reduziert wird, dass Beschichtungsmaterial verschleppt wird.

In einer weiteren vorteilhaften Ausführungsform verfügt der Einsatz 20 über die Sensorkammer 24, in welcher der Niveausensor 30 angeordnet ist.

Bevorzugt umschließt der Einsatz 20 den Niveausensor 30 zumindest teilweise, beispielsweise entlang des Erfassungsbereichs 32 des Niveausensors 30.

Weiter bevorzugt liegt der Niveausensor 30 vollständig innerhalb der Sensorkammer 24. Unter vollständig innerhalb der Sensorkammer 24 ist zu verstehen, dass beispielsweise die Rückseite des Niveausensors 30 weiterhin frei zugänglich ist. Die Rückseite des Niveausensors 30 kann dabei über die Abdeckung 45 zumindest teilweise abdeckt werden. Die Anschlüsse des Niveausensors 30 sind auch im verbauten Zustand weiterhin zugänglich.

Weiter bevorzugt ist an der Abdeckung 45 ein Spülgasanschluss 42 angeordnet. Über den Spülgasanschluss 42 kann der Einsatz 20 und damit der Erfassungsbereich 32 des Niveausensors 30 mit Spülgas gespült werden. Dies ist besonders vorteilhaft, wenn sich Beschichtungsmaterial 64 vor dem Erfassungsbereich 32 des Niveausensors 30 abgelagert hat und somit die Erfassung des Beschichtungsmittelniveaus beeinträchtigt ist. Ohne die bestünde die Gefahr, dass die Ablagerung die Niveaumessung verfälscht und der Niveausensor 30 einen falschen Niveauwert ausgibt. Die Ablagerung bewirkt in der Regel, dass der gemessene Niveauwert höher als das tatsächliche Niveau ist. Durch die Spülung können der Erfassungsbereich 32 und der Einsatz 20 mit Spülgas abgespült respektive durchspült werden und somit Ablagerungen vermieden oder entfernt werden.

Die Steuerung 48 kann auch vorgesehen sein, um die Förderung von Beschichtungsmaterial 64, die Signale des Niveausensors 30 und die Spülung des Einsatzes 20 zu überwachen und/oder zu steuern.

Weiter vorteilhaft ist es, wenn die Abdeckung 45 an der Außenseite der Behälterwand 2 des Vorratsbehälters 1 befestigt ist. Die Befestigung kann dabei mittels Befestigungsmitteln 50, beispielsweise über eine Verschraubung realisiert werden.

Weiter vorteilhaft dichtet der Einsatz 20 die Öffnung 4 in der Seitenwand 2 des Vorratsbehälters 1 gegenüber der Sensorkammer 24 ab, sodass kein Beschichtungsmaterial 64 in die Sensorkammer 24 eindringen kann.

Weiter vorteilhaft ist zwischen der Seitenwand 2 des Vorratsbehälters 1 und der Abdeckung 45 die Dichtung 18 angeordnet. Die Dichtung 18 kann dabei beispielsweise ein O-Ring sein.

Weiter vorteilhaft ist zwischen dem Niveausensor 30 und der Abdeckung 45 eine Dichtung 16 angeordnet. Die Dichtung 16 kann dabei beispielsweise in Form eines O-Rings vorliegen.

Wie weiter oben bereits dargestellt, ist es vorteilhaft, wenn die Abdeckung 45 über Befestigungsmittel 50 an der Seitenwand 2 des Vorratsbehälters 1 befestigt ist. Somit werden der Einsatz 20 und der Niveausensor 30 in Position gehalten und entsprechend in der Öffnung 4 der Seitenwand 2 befestigt. Als Befestigungsmittel 50 können beispielsweise Schrauben eingesetzt werden, wobei andere Befestigungsmittel nicht ausgeschlossen sind.

Weiter kann der Spülkanal 22 durch den Einsatz 20 und die Abdeckung 45 gebildet sein.

Weiter vorteilhaft ist, dass der Spülanschluss 42 mit dem Spülkanal 22 verbunden ist, sodass das Spülgas über den Spülanschluss 42 in den Spülkanal 22 strömen kann.

Weiter vorteilhaft kann der Spülkanal 22 ein umlaufender Spülkanal sein, welcher vollständig um den Erfassungsbereich 32 des Niveausensors 30 herumführt. Hier kann der Spülkanal 22 als Ringkanal ausgebildet sein.

Die Spülkanalauslässe 26 erstrecken sich dabei vorteilhafterweise in Richtung des Erfassungsbereichs 32 des Niveausensors 30. Dadurch wird das Spülgas gleichmäßig verteilt und der Einsatz 20 gleichmäßig gespült.

Weiter kann es vorteilhaft sein, wenn zusätzlich an der schmalen Seite des Einsatzes 20 mindestens ein Spülkanalauslass vorhanden ist. Da sich das Spülgas den Weg des geringsten Widerstands sucht, kann durch den Spülkanal mit den entsprechenden Spülkanalauslässen das Spülgas zielgerichtet geleitet werden, beispielsweise auf den Erfassungsbereich 32 des Niveausensors 30.

Bei einer anderen Ausführungsform der erfindungsgemäßen Vorrichtung ist die lange Seite L1 des Einsatzes 20 mindestens so lang wie die Länge des Niveausensors 30. Dies hat den Vorteil, dass der gesamte Erfassungsbereich 32 des Niveausensors 30 durch den Einsatz 20 abgedeckt ist und somit vorteilhaft auch gleichmäßig gespült werden kann. Dies führt dazu, dass der Erfassungsbereich 32 von einer ungewollten Ablagerung des Beschichtungsmaterials freigehalten werden kann.

Es ist nicht auszuschliessen, dass die Spülung zu einem erhöhten Rauschen im Messignal des Niveausensors 30 führt. Unter Umständen kann es also zu fehlerhaften Messungen kommen, wenn der Niveausensor 30 kontinuierlich mit Spülgas gespült wird. Um solche Messfehler zu vermeiden, kann es hilfreich sein, den Spülvorgang diskontinuierlich auszuführen.

Ein weiterer Vorteil bei einer diskontinuierlichen Spülung ist, dass der Spülgasverbrauch gegenüber einer kontinuierlichen Spülung reduziert wird. Die diskontinuierliche Spülung kann dabei derart gestaltet sein, dass ein kurzer Spülimpuls alle 30 oder 60 Sekunden ausgeführt wird. Beispielsweise ist es möglich, dass alle 30 Sekunden ein Spülimpuls von 2 Sekunden erfolgt. Hierbei kann beispielsweise mit einer Luftmenge von 1,5 Nm³/h (Normkubikmeter pro Stunde) gespült werden. Andere Spülzyklen sind jedoch keineswegs ausgeschlossen. So wäre beispielsweise auch ein Spülimpuls von 2,5 Sekunden alle 45 Sekunden oder ein Spülimpuls von 1,5 Sekunden alle 35 Sekunden denkbar. Je nach Beschichtungsmaterial kann die Häufigkeit des Spülens auch variieren, da sich verschiedenes Beschichtungsmaterialien unterschiedlich stark ablagern. Die hier angegebenen Zahlenwerte sind rein beispielhaft zu verstehen. So können die Zeiten beliebig eingestellt werden.

Für die Spülung des Einsatzes 20 respektive des Erfassungsbereichs 32 kann es von Vorteil sein, wenn die Messung des Niveausensors 30 kurzzeitig unterbrochen wird, sodass das Messergebnis nicht durch die Spülung verfälscht wird. Mit kurzzeitig unterbrochen ist gemeint, dass die erfassten Messerwerte nicht von der Steuerung 48 ausgewertet respektive berücksichtigt werden. Beispielsweise kann vorgesehen sein, dass die Steuerung 48 in einem Zeitraum von 1 Sekunde vor und 2 Sekunden nach der Spülung, die vom Niveausensor 30 erhaltenen Messwerte verwirft. Der Niveausensor 30 unterbricht in diesem Zeitraum die Niveaumessung zwar nicht, gilt für diesen Zeitraum aber als blind.

Eine kontinuierliche Spülung ist nicht per se ausgeschlossen. Die Spülung kann in Einzelfällen auch dann kontinuierlich erfolgen, wenn der Niveausensor 30 während der Spülung an Messgenauigkeit verliert.

Ausführliche Tests haben folgendes gezeigt. Wenn das Pulverniveau im Vorratsbehälter 1 hoch ist, driften die vom Niveausensor 30 gelieferten Messwerte bei einer ununterbrochenen respektive kontinuierlichen Spülung mit der Zeit nach oben hin ab. Die Messsignale wichen dann von der Sollwert-Linie ab. Daher wird bei einem höheren Niveau eine diskontinuierliche Spülung bevorzugt. Eine kontinuierliche Spülung ist, wie bereits zuvor erwähnt, jedoch nicht ausgeschlossen.

Ebenso ist eine Kombination aus kontinuierlicher und diskontinuierlicher Spülung vorstellbar. So kann bei einem hohen Füllstand (Vorratsbehälter 1 ist gleich oder zu mehr als 50% der Füllmenge gefüllt) eine diskontinuierliche Spülung erfolgen. Bei einem niedrigen Füllstand (Vorratsbehälter ist zu weniger als 50% der Füllmenge gefüllt) erfolgt die Spülung kontinuierlich.

Es kann vorgesehen sein, dass der Erfassungsbereich 32 des Niveausensors 30 den Einsatz 20 berührt, also direkt am Einsatz 20 anliegt. Der Erfassungsbereich 32 ist die für die Niveaumessung wirksame Oberfläche des Niveausensors 30.

Vorteilhafterweise erfasst der Niveausensor 30 das Pulverniveau 62 innerhalb des Vorratsbehälters 1 nicht nur stufenlos, sondern auch kontinuierlich. Somit kann das Pulverniveau 62 stufenlos und kontinuierlich erfasst werden. Unter stufenlos wird verstanden, dass nicht beispielsweise alle 5 cm ein Messpunkt vorhanden ist, sondern der Niveausensor 30 einen durchgängigen, das heißt stufenlosen, Erfassungsbereich aufweist. Unter kontinuierlich wird hierbei verstanden, dass der Niveausensor 30 nicht beispielsweise alle 5 Sekunden eine Niveaumessung durchführt, sondern das Pulverniveau 62 fortdauernd und lückenlos oder annähernd lückenlos misst.

Ein weiterer Vorteil einer kontinuierlichen Niveaumessung respektive Niveauerfassung ist, dass somit zu jeder Zeit festgestellt werden kann, wie viel Beschichtungsmaterial 64 im Vorratsbehälter 1 vorhanden ist. Dadurch wird ein optimales Leerfahren des Vorratsbehälters 1 ermöglicht. Mit Beendigung des Beschichtungsvorgangs enthält der Vorratsbehälter 1 dann kein oder nur noch wenig Beschichtungsmaterial. Dies hat den Vorteil, dass überschüssiges Beschichtungsmaterial nicht zunächst zurückgeführt werden muss, bevor mit einem neuen Beschichtungsvorgang, welcher beispielsweise ein anderes Beschichtungsmaterial verwendet, begonnen wird. Die Absenkung des Niveaus des Beschichtungsmaterials kann dabei auch über einen zusätzlichen Förderer (nicht gezeigt) bewusst gesteuert werden. Dies kann dabei auch bereits während des eigentlichen Beschichtungsbetriebs erfolgen. Der zusätzliche Förderer kann das Beschichtungsmaterial zurück in ein Reservoir leiten.

Vorteilhafterweise ist Messauflösung des Niveausensors 30 besser als 50 mm, weiter bevorzugt besser als 25 mm, und noch weiter bevorzugt besser als 10 mm. Je besser die Auflösung des Niveausensors 30 ist, desto höher ist die Messgenauigkeit über die gesamten Messtrecke hinweg.

Vorteilhafterweise hat die Öffnung 4 in der Seitenwand 2 des Vorratsbehälters 1 eine Länge zwischen 100 mm und 500 mm. Der Erfassungsbereich 32 des Niveausensors 30 hat vorzugsweise die gleiche oder im Wesentlichen die gleiche Länge.

Bei einer anderen Ausführungsform der erfindungsgemäßen Vorrichtung ist eine Fördereinheit 66 vorhanden. Die Fördereinheit 66 ist vorgesehen, um Beschichtungsmaterial 64 in den Vorratsbehälter 1 zu fördern. Dabei kann die Förderung von Beschichtungsmaterial automatisch oder per Hand ausgeführt werden. Beispielsweise kann eine Förderung von Beschichtungsmaterial in den Vorratsbehälter 1 automatisch erfolgen, sobald das erfasste Pulverniveau 62 unterhalb eines definierten Wertes liegt. Dieser Wert kann beispielsweise das minimale Pulverniveau 63 (siehe Figur 6) sein.

Es kann durchaus auch vorteilhaft sein, wenn die Vorrichtung eine Vielzahl von Fluidisiergaseinlässen aufweist. Diese können dabei beispielweise gleichmäßig an der Seitenwand 2, vorzugsweise im unteren Bereich, der Vorratsbehälterwand, oder beispielsweise direkt im Bodenbereich, respektive im Boden des Vorratsbehälters 1 angeordnet sein. Vorzugsweise weist der Vorratsbehälter 1 neben dem Fluidisiergaseinlass 12 auch einen Fluidboden 13 auf. Durch diese Anordnung wird das Beschichtungsmaterial 64 gleichmäßig vom Bodenbereich her fluidisiert.

Vorteilhafterweise weist der Vorratsbehälter 1 auch eine Entlüftungseinrichtung auf, um einen möglichen Überdruck innerhalb des Vorratsbehälters 1 zu senken und auf Umgebungsdruck zu regulieren. Die Entlüftungseinrichtung kann dabei als Ventil ausgebildet sein.

Weiter vorteilhaft ist es, wenn der Vorratsbehälter 1 über eine zusätzlichen Detektor 14 verfügt, welcher beispielsweise als Grenzschalter ausgebildet ist. Mit dem Detektor 14 kann detektiert werden, ob das Pulverniveau 62 im Vorratsbehälter 1 einen oberen Grenzwert erreicht hat. Damit soll verhindert werden, dass sich zu viel Beschichtungsmaterial 64 im Vorratsbehälter 1 befindet und er nicht überfüllt wird. Sobald der obere Grenzwert erreicht ist, gibt der Detektor 14 ein Alarmsignal aus und die Steuerung 48 stoppt die Befüllung des Vorratsbehälters 1 durch die Fördereinheit 66.

In einer vorteilhaften Ausführungsform ist der Förderer 10 zum Fördern von Beschichtungsmaterial als Dichtstrom- oder Dünnstrompumpe (beispielsweise Pulverinjektor gemäß DE10315029A1) ausgestaltet. Eine Förderung des Beschichtungsmaterials, wie sie beispielsweise in der EP3238832A1 beschrieben wird, ist ebenfalls umfasst. Auch andere Pulverfördertechnologien sind nicht ausgeschlossen (zum Beispiel mittels Schwerkraft). Ebenso kann neben der Ausführung mit lediglich einem einzelnen Förderer 10 auch eine Vielzahl von derartigen Förderern 10 vorteilhaft sein. Beide Ausführungsformen werden als gleichwertig betrachtet.

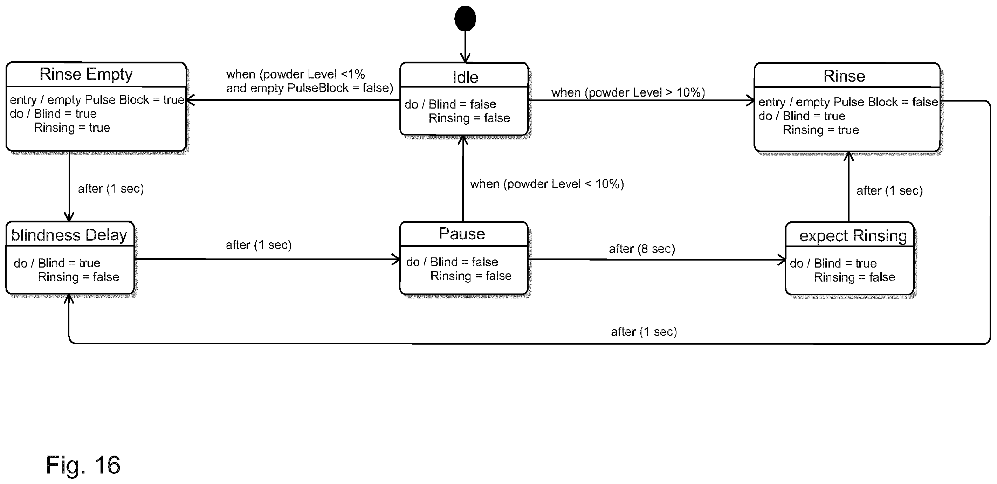

Figur 16 zeigt in Form eines Ablaufdiagramms einen möglichen Verfahrensablauf und verschiedene Verfahrenszustände (Status). Bevor die einzelnen Status näher erläutert werden, sei folgendes erwähnt. Es kommt immer wieder vor, dass sich Pulver im Erfassungsbereich des Niveausensors 30 ablagert, was die Messung des Pulverniveaus 62 verfälscht. Um das Pulver zu entfernen, wird der Niveausensor 30 gespült. Der Niveausensor 30 gilt dann für eine bestimmte Zeitdauer als blind.

Im Status «Idle» ist der Niveausensor 30 weder blind noch wird er gespült. Dies ist im Ablaufdiagramm im Status «Idle» mit den Werten «Blind = false» und «Rinsing = false» angegeben. Die vom Niveausensor 30 erfassten Niveauwerte werden in diesem Zustand an die Steuerung 48 (Fig. 1) übertragen.

Wenn das vom Niveausensor 30 gemessene Niveau des Beschichtungsmaterials mehr als 10 % vom maximalen Niveau beträgt, wird der Status «Rinse» erreicht. Die im Status «Rinse» erfassten Niveauwerte werden von der Steuerung 48 nicht berücksichtigt. Der Niveausensor 30 gilt als blind. Dies ist im Ablaufdiagramm bei Status «Rinse» mit den Werten «Blind = true» und «Rinsing = true» gezeigt. Zudem ist der Wert «empty Pulse Block = false» angegeben.

Anschließend (hier im Beispiel nach 1 Sekunde) wird der Status «blindness Delay» erreicht. Hier gilt der Niveausensor als blind und die erfassten Niveauwerte werden von der Steuerung 48 nicht berücksichtigt. Im Status «blindness Delay» erfolgt keine Spülung. Dies ist angeben durch die Werte «Blind = true» und «Rinsing = false».

Anschließend (hier im Beispiel nach 1 Sekunde) wird der Status «Pause» erreicht. In diesem Zustand gilt der Niveausensor weder als blind noch erfolgt eine Spülung. Dies ist im Status «Pause» mit den Werten «Blind = false» und «Rinsing = false» angegeben. Die hier ermittelten Niveauwerte werden von der Steuerung 48 berücksichtigt.

Liegt das Niveau des Beschichtungsmaterials 64 10% unter dem maximalen Niveau, wird wieder der Status «Idle» erreicht.

Ist dies nicht der Fall, so wird der Status «expect Rinsing» erreicht. Hier im Beispiel ist dies nach 8 Sekunden der Fall. Im Status «expect Rinsing» gilt der Niveausensor als blind, obwohl noch keine Spülung erfolgt. Dies ist bei Status «expect Rinsing» mit den Werten «Blind = true» und «Rinsing = false» angegeben. Die hier erfassten Niveauwerte werden von der Steuerung 48 nicht berücksichtigt.

Anschließend (hier im Beispiels nach 1 Sekunde) wird wieder der bereits zuvor beschriebe Status «Rinse» erreicht.

Ausgehend von dem zuvor beschriebenen Status «Idle», wenn das gemessene Niveau des Beschichtungsmaterials niedriger als 1% vom maximalen Niveau ist und wenn «empty Pulse Block» gleich «false» ist, wird der Status «Rinse Empty» erreicht.

Im Status «Rinse Empty» wird eine einmalige Spülung ausgeführt. Dies ist im Status «Rinse Empty» mit dem Wert «empty Pulse Block = true» angegeben. Während dieses Status gilt der Niveausensor als blind «Blind = true» und es erfolgt eine Spülung «Rinsing = true». Die erfassten Niveauwerte werden von der Steuerung 48 nicht berücksichtigt. Diese einmalige Spülung soll ermöglichen, dass nochmals eine Spülung erfolgt, wenn der Vorratsbehälter 1 geleert werden soll. Dies ist beispielweise dann der Fall, wenn ein Wechsel des Beschichtungsmaterials erfolgen soll.

Anschließend (hier im Beispiel nach 1 Sekunde) wird wieder der zuvor beschriebene Status «blindness Delay» erreicht.

Nachfolgend sind die jeweiligen Kreisläufe nochmals in Kurzversion dargestellt.

Zu Beginn eines Beschichtungsprozesses wird wie folgt verfahren:
«Idle» → «Rinse» → «blindness Delay» → «Pause» → «expect Rinsing» → «Rinse»

Während des Beschichtungsprozesses setzt sich der Ablauf als wiederkehrende Schleife wie folgt zusammen:
«Rinse» → «blindness Delay» → «Pause» → «expect Rinsing» → «Rinse»

Beim Leerfahren des Vorratsbehälters 1, beispielsweise vor dem Wechsel des Beschichtungsmaterials, setzt sich der Ablauf wie folgt zusammen:
«Pause» → «Idle» → «Rinse Empty» → «blindness Delay» → «Pause» → «Idle»

Die zuvor angegeben Zahlenwerte dienen lediglich zum besseren Verständnis. Der Niveausensor 30 respektive die Steuerung 48 können auch mit anderen Werten eingestellt werden. Der Begriff «entry» signalisiert eine einmalige Ausführung, wenn der jeweilige Status erreicht wird. Der Begriff «do» beschreibt, was dauerhaft während des jeweiligen Status ausgeführt wird.

Um das Niveau des Beschichtungsmaterials zu erfassen, kann zum Beispiel wie folgt verfahren werden. Das Niveau 62 des Beschichtungsmaterials 64 wird im Vorratsbehälter 1 mit Hilfe des Niveausensors 30 stufenlos erfasst. Wenn ein bestimmtes Ereignis auftritt, wird Spülgas durch den Einsatz 20 geleitet.

Wenn hier die Rede von einem bestimmten Ereignis ist, ist damit zum Beispiel die Erkennung einer Ablagerung von Beschichtungsmaterial gemeint. Das bestimmte Ereignis kann auch ein vordefiniertes erfasstes Niveau des Beschichtungsmaterials sein. So kann eine Spülung beispielsweise ausgelöst werden, wenn das Niveau des Beschichtungsmaterials 10% des maximalen Niveaus 65 überschreitet. Mit dem bestimmten Ereignis kann auch die Unterbrechung eines Vorgangs gemeint sein. So kann die Spülung dann durchgeführt werden, wenn die Pulverförderung unterbrochen wurde. Dies ist beispielsweise dann der Fall, wenn der Beschichtungsvorgang pausiert respektive unterbrochen wird. Das bestimmte Ereignis kann auch das Ende eines Zeitintervalls sein. So kann die Spülung nach Ablauf des Zeitintervalls erfolgen, beispielsweise alle 2, 5 oder 10 Minuten. Dabei kann die Spülung sowohl während eines Beschichtungsprozesses als auch während einer Arbeitsunterbrechung erfolgen. Die Spülung kann auch vom Bedienpersonal ausgelöst werden. Ein weiters Beispiel für ein bestimmtes Ereignis ist der Befehl zur Auslösung eines Beschichtungsmaterialwechsel.

Die vorhergehende Beschreibung der Ausführungsbeispiele dient nur zu illustrativen Zwecken. Verschiedene Änderungen und Modifikationen sind selbstverständlich möglich.

### Bezugszeichenliste

- 1: Vorratsbehälter
- 2: Seitenwand
- 2.1: Pulverauslass in der Seitenwand
- 2a: Innenseite
- 3: Innenraum
- 4: Öffnung
- 5: Deckel
- 10: Förderer
- 12: Fluidisiergaseinlass
- 13: Fluidboden
- 14: Detektor
- 16: Dichtung
- 18: Dichtung
- 20: Einsatz
- 20a: abgesetzte Fläche
- 20b: abgesetzte Fläche
- 22: Spülkanal
- 24: Sensorkammer
- 26: Spülkanalauslass / Spülgaskammer
- 30: Niveausensor
- 32: Erfassungsbereich
- 33: Stufe
- 34: Schulter
- 40: Spülgasanschluss
- 42: Aufnahme
- 44: Spülgasquelle
- 45: Abdeckung
- 46: Strömungsrichtung des Spülgases
- 48: Steuerung
- 50: Befestigungsmittel
- 52: Aufnahme
- 54: Leitung
- 60: Applikator
- 62: Niveau des Beschichtungsmaterials
- 63: minimales Beschichtungsmaterialniveau
- 64: Beschichtungsmaterial
- 65: maximales Beschichtungsmaterialniveau
- 66: Zuführeinrichtung
- 70: Baugruppe
- a: Länge
- b: Breite
- L1: lange Seite
- L2: schmale Seite
- H: Niveaudifferenz

## Patentansprüche

1. Vorrichtung zum Fördern von Beschichtungsmaterial,
- die einen Vorratsbehälter (1) für Beschichtungsmaterial (64) aufweist,
- die einen Förderer (10) aufweist, um das Beschichtungsmaterial (64) aus dem Vorratsbehälter (1) heraus zu fördern,
- bei der der Vorratsbehälter (1) eine Seitenwand (2) mit einer Öffnung (4) aufweist, welche mindestens so hoch ist wie die Niveaudifferenz (H), die sich aus einem minimalen Beschichtungsmaterialniveau (63) und einem maximalen Beschichtungsmaterialniveau (64) ergibt, welche während des Förderbetriebs auftreten können,
- bei der ein poröser Einsatz (20) vorhanden ist, der in der Öffnung (4) angeordnet ist,
- bei der direkt hinter dem Einsatz (20) ein Niveausensor (30) angeordnet ist, der einen Erfassungsbereich (32) aufweist, der mindestens so hoch wie die Niveaudifferenz (H) ist,
- bei der der Niveausensor (30) so ausgebildet und betreibbar ist, dass er das Niveau (62) des Beschichtungsmaterials (64) stufenlos erfasst, und
- die einen Spülgasanschluss (40) aufweist, über den Spülgas durch den Einsatz (20) hindurch in den Vorratsbehälter (1) leitbar ist.

2. Vorrichtung nach Anspruch 1,
bei der der Einsatz (20) derart ausgebildet ist,
dass er durchlässig für das Spülgas und undurchlässig für das Beschichtungsmaterial (64) ist.

3. Vorrichtung nach einem der vorherigen Ansprüche,
- bei der ein Spülkanal (22) vorhanden ist, der entlang der Längsseite des Niveausensors (30) verläuft, und
- bei der der Einsatz (20) zumindest eine Wand des Spülkanals (22) bildet.

4. Vorrichtung nach einem der vorherigen Ansprüche,
- bei der der Einsatz (20) eine lange Seite (L1) und eine schmale Seite (L2) aufweist, und
- bei der der Spülkanal (22) mehrere Spülkanalauslässe (26) aufweist, die entlang der langen Seite (L2) des Einsatzes (20) verteilt sind, und die vorgesehen sind, um Spülgas in den Einsatz (20) leiten zu können.

5. Vorrichtung nach einem der Ansprüche 1 bis 3,
- bei der der Einsatz (20) eine lange Seite (L1) und eine schmale Seite (L2) aufweist, und
- bei der die lange Seite (L1) des Einsatzes (20) mindestens so lang ist wie die Länge des Erfassungsbereichs des Niveausensors (30).

6. Vorrichtung nach einem der vorherigen Ansprüche, bei der der Niveausensor (30) ein kapazitiver Niveausensor ist.

7. Vorrichtung nach einem der vorherigen Ansprüche, bei der der Niveausensor (30) plan am Einsatz (20) anliegt.

8. Vorrichtung nach einem der vorherigen Ansprüche, bei der eine Steuerung (48) vorhanden ist, die derart ausgebildet ist, dass sie dafür sorgen kann, dass das Spülgas diskontinuierlich durch den Einsatz (20) hindurch strömt.

9. Vorrichtung nach einem der vorherigen Ansprüche, bei der eine Fördereinheit (66) vorhanden ist, um Beschichtungsmaterial (64) in den Vorratsbehälter (1) fördern zu können.

10. Vorrichtung nach einem der vorherigen Ansprüche, bei der der Vorratsbehälter (1) einen Fluidisiergaseinlass (12) aufweist.

11. Verfahren zum Erfassen des Beschichtungsmaterialniveaus im Vorratsbehälter einer Vorrichtung nach Anspruch 1,
- bei dem das Niveau (62) des Beschichtungsmaterials (64) im Vorratsbehälter (1) mit Hilfe des Niveausensors (30) stufenlos erfasst wird, und
- bei dem Spülgas durch den Einsatz (20) geleitet wird, wenn ein bestimmtes Ereignis auftritt.

12. Verfahren nach Anspruch 11,
bei dem Spülgas impulsweise durch den Einsatz (20) geleitet wird, wenn ein bestimmtes Ereignis auftritt.

13. Verfahren nach einem der Ansprüche 11 oder 12,
bei dem die Erfassung des Niveaus (62) unterbrochen wird, wenn Spülgas durch den Einsatz (20) geleitet wird.
